# EUROPÄISCHE PATENTSCHRIFT

(11) **EP 1 297 394 B1**
(45) Veröffentlichungstag und Bekanntmachung des Hinweises auf die Patenterteilung: **17.03.2004**
(21) Anmeldenummer: 01951426.4
(22) Anmeldetag: 27.06.2001
(51) Int. Cl.: G05B 19/418

(54) **REDUNDANTES STEUERUNGSSYSTEM SOWIE STEUERRECHNER UND PERIPHERIEEINHEIT FÜR EIN DERARTIGES STEUERUNGSSYSTEM**
REDUNDANT CONTROL SYSTEM AND CONTROL COMPUTER AND PERIPHERAL UNIT FOR SAID CONTROL SYSTEM
SYSTEME DE COMMANDE REDONDANT AVEC CALCULATEUR PILOTE, ET UNITE PERIPHERIQUE POUR UN TEL SYSTEME DE COMMANDE

(30) Priorität: 27.06.2000 DE 10030329
(43) Veröffentlichungstag der Anmeldung: 02.04.2003
(73) Patentinhaber: SIEMENS AKTIENGESELLSCHAFT, 80333 München (DE)
(72) Erfinder: LEHMANN, Ulrich, 76744 Wörth (DE)
(86) Internationale Anmeldenummer: PCT/DE2001/002331
(87) Internationale Veröffentlichungsnummer: WO 2002/001305

(56) Entgegenhaltungen:
- EP-A- 0 216 372
- DE-A- 19 814 096

## Beschreibung

Die Erfindung betrifft ein redundantes Steuerungssystem nach dem Oberbegriff des Anspruchs 1 sowie einen Steuerrechner und eine Peripherieeinheit für ein derartiges Steuerungssystem.

Aus dem Siemens-Katalog CA 01, 1999, der am 13.06.2000 im Internet unter der Adresse http://www3.ad.siemens.de/ca01online einsehbar war, sind das hochverfügbare Automatisierungssystem S7-400H mit redundant ausgelegtem Aufbau sowie die Anschaltung IM153-2, die zum Anschluss einer Peripherieeinheit ET 200M als Slave in redundanten PROFIBUS-DP-Systemen mit der S7-400H einsetzbar ist, bekannt.

In vielen Bereichen der Automatisierungstechnik werden immer höhere Anforderungen an die Verfügbarkeit und damit an die Ausfallsicherheit der Automatisierungssysteme gestellt. Es sind Bereiche, in denen ein Anlagenstillstand sehr hohe Kosten verursachen würde. Hier können nur redundante Systeme den Anforderungen an die Verfügbarkeit gerecht werden. Beispielsweise die hochverfügbare SIMATIC S7-400H arbeitet auch dann weiter, wenn durch einen oder mehrere Fehler Teile der Steuerung ausgefallen sind. Sie besitzt redundant ausgelegte zentrale Funktionen und ist mit zwei getrennten Zentralgeräten als Steuerrechner aufgebaut. Die beiden Steuerrechner arbeiten zyklisch und synchron die gleichen Verarbeitungsprogramme ab. Sie überwachen sich gegenseitig und legen selbständig fest, welcher Steuerrechner aktiv ist, d. h. tatsächlich über seine Ausgabedaten den Prozess steuert. Hierzu werden Daten über eine Redundanzkopplung zwischen den beiden Steuerrechnern ausgetauscht. Eine dezentrale Peripherieeinheit ET 200M, in welche je nach Einsatzfall digitale Ein-/Ausgabebaugruppen gesteckt sind, ist jeweils mit einem Feldbus PROFIBUS-DP an die beiden Steuerrechner angeschlossen. Dabei können selbstverständlich auch die Peripherieeinheiten redundant ausgeführt werden. Mit Hilfe von Messumformern oder -gebern gewonnene Prozesseingangsinformationen werden durch die Peripherieeinheit an beide Steuerrechner weitergeleitet. Beim so genannten "Hot Stand By"-Betrieb arbeiten die beiden Steuerrechner im ungestörten Fall gleichzeitig dasselbe Steuerungsprogramm ab, es ist jedoch nur ein Steuerrechner aktiv, d. h., nur die Ausgabedaten eines Steuerrechners werden zur Steuerung des Prozesses weiterverarbeitet. Im Fehlerfall übernimmt das intakte Gerät allein die Steuerung des Prozesses. Dazu erhalten die Geräte automatisch das gleiche Anwenderprogramm, die gleichen Datenbausteine, die gleichen Prozessabbildinhalte sowie die gleichen internen Daten, wie z. B. Zeiten, Zähler, Merker usw. Dadurch sind beide Geräte immer auf dem aktuellen Stand und können im Fehlerfall jederzeit die Steuerung alleine weiterführen. Prozessausgabedaten, durch welche die an die Stellglieder von der Peripherieeinheit auszugebenden Signale vorgegeben werden, werden der Peripherieeinheit im ungestörten Fall über beide Feldbusse angeboten, sie wertet jedoch nur die von einem der Feldbusse empfangenen Steuerdaten aus. Der jeweils angeschlossene Steuerrechner kann somit als der aktive Steuerrechner bezeichnet werden. Bei einem Ausfall des jeweils aktiven Steuerrechners werden von diesem keine Prozessausgabedaten mehr über den Feldbus übertragen und die Peripherieeinheit schaltet nach Ablauf einer vorbestimmten Überwachungszeit auf den anderen Steuerrechner um, d. h., es werden die Telegramme des anderen Feldbusses ausgewertet, um entsprechende Signale für die angeschlossenen Stellglieder zu erzeugen. Die Umschaltung erfolgt daher nur nach gravierenden Störungen, die zum Ausfall eines Feldbusses führen. Nachteilig dabei sind die langen Umschaltzeiten, die von den Telegrammzykluszeiten abhängig sind, und die unvollständige Überwachung der Übertragungskette, da bereits der Empfang von Telegrammen für die Feststellung eines intakten Feldbusses ausreicht und Verfälschungen unerkannt bleiben.

Der Erfindung liegt die Aufgabe zugrunde, ein redundantes Steuerungssystem sowie einen Steuerrechner und eine Peripherieeinheit für ein derartiges Steuerungssystem zu schaffen, die robust und unempfindlich gegen Störungen sind und sich durch einen einfachen Aufbau auszeichnen.

Zur Lösung dieser Aufgabe weist das neue redundante Steuerungssystem der eingangs genannten Art die im kennzeichnenden Teil des Anspruchs 1 angegebenen Merkmale auf. Vorteilhafte Ausgestaltungen sowie ein Steuerrechner und eine Peripherieeinheit für ein derartiges Steuerungssystem sind in den weiteren Ansprüchen beschrieben.

Die Erfindung hat den Vorteil, dass für die Übertragung der Lebenszeichen dasselbe Bussystem verwendet werden kann, das schon für die Übertragung der Steuerdaten dient und somit ohnehin vorhanden ist. Zusätzliche Kommunikationskanäle sind nicht erforderlich. Durch den zyklischen Wechsel der Lebenszeichen wird eine künstliche Signaldynamik geschaffen, die eine Überwachung der gesamten Übertragungskette zwischen Steuerrechner und Peripherieeinheit ermöglicht. Zusätzlich wird durch den Wechsel der Lebenszeichen die Aktivität des Steuerrechners überwacht, da dieser den Wechsel des Lebenszeichens ausführen muss. Der aktive Steuerrechner kann in einfacher Weise ein Umschalten auf den anderen Steuerrechner zur Ausführung der Steuerungsaufgabe veranlassen, indem er kein oder ein gleich bleibendes Lebenszeichen an die Peripherieeinheit sendet. Dabei ist ein Umschalten ohne Verlust von Steuerdaten stoßfrei möglich. Diese Maßnahme ist beispielsweise sinnvoll, um bei Teilausfällen, die bei der Selbstdiagnose des aktiven Steuerrechners festgestellt werden, ein Umschalten einzuleiten. Weiterhin schaltet die Peripherieeinheit auf den anderen Steuerrechner in dem Fall um, wenn der bisher aktive Steuerrechner abrupt ausgefallen ist und selbst keine Umschaltung in der oben beschriebenen Weise einleiten kann. Durch das redundante Steuerungssystem wird zudem in einfacher Weise der Betriebsfall beherrscht, wenn beide Steuerrechner ohne Störungen arbeiten oder wenn beide Steuerrechner defekt sind. Im ersten Fall wird der derzeit aktive Steuerrechner in diesem Zustand belassen und im letzteren Fall, der durch die Peripherieeinheit anhand des Fehlens der Lebenszeichen von den beiden Steuerrechnern einfach festgestellt werden kann, steuert diese den Prozess durch geeignet vorbestimmte Ausgabesignale in einen sicheren Zustand. Mit Telegrammen, welche die Peripherieeinheit über das Bussystem an die beiden Steuerrechner sendet, kann sie diesen den jeweiligen Zustand mitteilen, d. h. welcher Steuerrechner gerade aktiv ist. Durch die Übertragung der Lebenszeichen von den Steuerrechnern über das Bussystem zur Peripherieeinheit werden zudem alle relevanten Übertragungsglieder der Übertragungskette, z. B. Kommunikationsprozessoren, Stecker, Buskabel usw., in die Überwachung einbezogen, so dass auch deren Ausfall erkannt wird.

Wenn die beiden Steuerrechner im ungestörten Fall dasselbe Steuerprogramm ausführen, ist in vorteilhafter Weise ein stoßfreies Umschalten gewährleistet.

Mit Vorteil wird ein gezieltes, mit einer Überwachung kombiniertes Umschalten ermöglicht, wenn die beiden Steuerrechner Lebenszeichen mit jeweils verschiedenen Wertigkeiten übertragen. Erkennt ein Steuerrechner mit Hilfe seiner Selbstdiagnosefunktion eine untergeordnete Störung, so kann er durch Herabsetzen der Wertigkeit seines Lebenszeichens ein Umschalten auf den anderen Steuerrechner einleiten. Eine untergeordnete Störung kann beispielsweise eine abweichende Speichersignatur sein, die bei einer Speicherüberwachung festgestellt wird, bevor das Steuerprogramm diesen Speicherbereich benutzt, und die somit nicht unmittelbar zum Ausfall des Steuerrechners führt. Durch das frühzeitige Umschalten wird eine weitere Verbesserung der Unempfindlichkeit des redundanten Steuerungssystems gegenüber Störungen erreicht.

Ein Übertragen der Lebenszeichen innerhalb der regulären Telegramme für die Steuerdaten hat den Vorteil, dass über die zyklischen Steuerdatentelegramme hinaus, die ohnehin zwischen Steuerrechnern und Peripherieeinheit ausgetauscht werden, keine besonderen Telegramme für die Lebenszeichen erforderlich sind. Ein Telegramm-Overhead, der für die Übertragung gesonderter Lebenszeichentelegramme, beispielsweise zur Adressierung im Bussystem, erforderlich wäre und die Übertragungsgeschwindigkeit der Nutzdaten verringern würde, entsteht somit nicht.

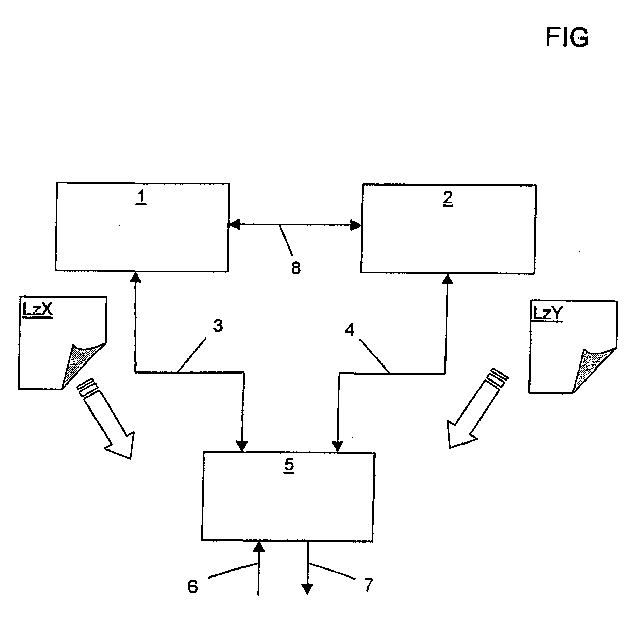

Anhand der Zeichnung, in der ein redundantes Steuerungssystem als Ausführungsbeispiel der Erfindung dargestellt ist, werden im Folgenden die Erfindung sowie Ausgestaltungen und Vorteile näher erläutert.

Ein erster Steuerrechner 1 und ein zweiter Steuerrechner 2 sind jeweils über einen Feldbus 3 bzw. 4 mit einer Peripherieeinheit 5 verbunden. Dabei genügen die Feldbusse 3 und 4 der PROFIBUS-DP-Spezifikation. Prinzipiell sind auch andere Bussysteme, z. B. Ethernet, Fieldbus usw., aber auch parallele Bussysteme geeignet. Die Peripherieeinheit 5 erhält über Eingangsleitungen 6 Signale von Messumformern oder -gebern, die zur Erfassung eines Prozesszustands dienen, und gibt über Ausgangsleitungen 7 Signale an Stellglieder aus, mit welchen der Prozess beeinflusst wird. Der Prozess sowie die Messumformer, -geber und Stellglieder sind in der Figur der Übersichtlichkeit wegen nicht dargestellt. Die beiden Steuerrechner 1 und 2 arbeiten zyklisch und synchron dasselbe Steuerprogramm ab. Zu ihrer Synchronisation ist eine Redundanzkopplung 8 vorgesehen. Die Redundanz- und Überwachungsfunktionen über die Redundanzkopplung 8 können - soweit erforderlich - in üblicher Weise realisiert werden und müssen daher im Folgenden nicht weiter betrachtet werden.

Zusätzlich zu den Steuerdaten, die in üblicher Weise zwischen dem Steuerrechner 1 und der Peripherieeinheit 5 über den Feldbus 3 sowie zwischen dem Steuerrechner 2 und der Peripherieeinheit 5 über den Feldbus 4 ausgetauscht werden, übertragen der Steuerrechner 1 Lebenszeichen LzX über den Feldbus 3 bzw. der Steuerrechner 2 Lebenszeichen LzY über den Feldbus 4 an die Peripherieeinheit 5. Dabei besitzen die Lebenszeichen LzX eine höhere Wertigkeit als die Lebenszeichen LzY. Die Lebenszeichen LzX bestehen inhaltlich abwechselnd aus einem ersten Code, z. B. einer Hexadezimalzahl 55, und einem zweiten Code, z. B. einer Hexadezimalzahl AA. Die Lebenszeichen LzY werden durch einen dritten Code, z. B. die Hexadezimalzahl 33, und einen vierten Code, z. B. die Hexadezimalzahl CC, dargestellt. Die Lebenszeichen LzX und LzY werden innerhalb der regulären Telegramme, welche die ohnehin zu übertragenden Steuerdaten enthalten, zyklisch mit der Zeitperiode der Programmzykluszeit der schnellsten Applikation der Steuerrechner 1 und 2 an die Peripherieeinheit 5 gesendet. Damit wird mit der Programmzykluszeit der schnellsten Applikation ein Wechsel zwischen dem ersten und dem zweiten Code des Lebenszeichens LzX und entsprechend ein Wechsel zwischen dem dritten und dem vierten Code des Lebenszeichens LzY durchgeführt. Die Peripherieeinheit besitzt eine lokale Intelligenz und überprüft, ob innerhalb einer vorgebbaren Zeitdauer, die länger als die Programmzykluszeit der schnellsten Applikation der Steuerrechner 1 und 2 einzustellen ist, ein Wechsel der Lebenszeichen LzX und LzY aufgetreten ist und erkennt bei Ausbleiben eines Wechsels einen Fehler des jeweiligen Steuerrechners 1 bzw. 2. Dabei können technisch bedingte Schwankungen in der Periodendauer des Lebenszeichenwechsels in einfacher Weise durch geeignete Festlegung der Zeitdauer berücksichtigt werden. Im störungsfreien Fall wertet die Peripherieeinheit 5 die Steuerdaten zur Erzeugung der Prozessausgabesignale aus, welche sie über den Feldbus 3 vom ersten Steuerrechner 1 erhält, da dieser das höherwertige Lebenszeichen LzX sendet. Dieser Zustand wird auch beibehalten, wenn der zweite Steuerrechner 2 ebenfalls Lebenszeichen LzX, d. h. Lebenszeichen mit derselben Wertigkeit wie die Lebenszeichen des ersten Steuerrechners 1, an die Peripherieeinheit 5 sendet, wenn keine Lebenszeichen vom zweiten Steuerrechner 2 empfangen werden sollten oder wenn der erste Steuerrechner 1 die Wertigkeit seiner Lebenszeichen LzX auf die Wertigkeit der Lebenszeichen LzY des zweiten Steuerrechners 2 reduziert. Andererseits werden die Steuerdaten, die vom Feldbus 4 empfangen werden, in der Peripherieeinheit 5 dann ausgewertet, d. h., es wird auf den zweiten Steuerrechner 2 zur Ausführung der Steuerungsaufgabe umgeschaltet, wenn der erste Steuerrechner 1 lediglich Lebenszeichen LzY geringer Wertigkeit und der zweite Steuerrechner 2 Lebenszeichen LzX höherer Wertigkeit sendet oder wenn die Peripherieeinheit 5 vom ersten Steuerrechner 1 keine Lebenszeichen mehr empfangen kann. Werden von keinem der beiden Steuerrechner 1 und 2 mehr Lebenszeichen empfangen, so ist ein Doppelfehler aufgetreten und der zu steuernde Prozess wird durch Ausgabe geeigneter Prozessausgabesignale 7 in einen sicheren Zustand versetzt.

Mit Hilfe des beschriebenen Mechanismus werden somit die Lebenszeichen LzX und LzY unterschiedlicher Wertigkeit sowohl zur Überwachung der Steuerrechner und ihrer Kommunikationsverbindungen als auch zur aktiven Umschaltung benutzt. Zusammenfassend kann gesagt werden, dass die Peripherieeinheit 5 denjenigen Feldbus zur Auswertung der empfangenen Steuerdaten bevorzugt, auf dem die Lebenszeichen LzX angeboten werden. Sie gibt sich andererseits jedoch auch mit den Lebenszeichen LzY zufrieden, wenn sonst keine höherwertigeren Lebenszeichen angeboten werden. Die Umschaltung auf einen anderen Steuerrechner zur Ausführung der Steuerungsaufgabe kann in einfacher Weise durch Vertauschen der Lebenszeichen LzX und LzY eingeleitet werden.

Im Folgenden werden einige Ausfallsszenarien beschrieben:

### Beispiel 1:

Zunächst sind beide Steuerrechner 1 und 2 fehlerfrei, Steuerrechner 1 ist aktiv.
Nach einer gravierenden Störung, z. B. einer Stromversorgungsstörung, fällt Steuerrechner 1 abrupt aus.
Die Peripherieeinheit 5 erkennt den Ausfall des ersten Steuerrechners 1 unmittelbar nach Ablauf der vorgebbaren Lebenszeichenüberwachungszeit und schaltet auf den zweiten Steuerrechner 2 um. Da auf dem Feldbus 4 immer aktuelle Daten vom zweiten Steuerrechner 2 angeboten werden, erfolgt die Umschaltung stoßfrei.
Zusätzlich kann die Peripherieeinheit 5 den Feldbuswechsel dem nun aktiven Steuerrechner 2 in einem Telegramm mitteilen. Der zweite Steuerrechner 2 kann daraufhin seine Lebenszeichen LzY durch Lebenszeichen LzX der höheren Wertigkeit austauschen.

### Beispiel 2:

Zunächst sind wiederum beide Steuerrechner fehlerfrei und der erste Steuerrechner 1 ist aktiv.
Der erste Steuerrechner 1 erkennt mit Hilfe der Eigenüberwachung eine untergeordnete Störung, z. B. eine abweichende Speichersignatur, die nicht unmittelbar zum Ausfall des ersten Steuerrechners 1 führt.
Als Reaktion leiten der erste Steuerrechner 1 und der zweite Steuerrechner 2 einen Wechsel ihres Zustands ein. Dazu geht zunächst der zweite Steuerrechner 2 vom Senden von Lebenszeichen LzY auf das Senden von Lebenszeichen LzX über. Danach wechselt der erste Steuerrechner 1 und sendet nun anstelle der bisherigen Lebenszeichen LzX neue Lebenszeichen LzY. Die Peripherieeinheit 5 reagiert unmittelbar mit einer Umschaltung auf den nun aktiven Steuerrechner 2, sobald der erste Steuerrechner 1 den Wechsel der gesendeten Lebenszeichenwertigkeit vollzogen hat.
Die Peripherieeinheit 5 kann den Wechsel des Feldbusses wiederum dem nun aktiven zweiten Steuerrechner 2 in einem Telegramm mitteilen.

Die vorgebbare Zeitdauer, innerhalb welcher ein Wechsel eines Lebenszeichens im störungsfreien Fall aufgetreten sein muss, kann bei der Projektierung eingestellt werden. Der hierfür erforderliche Projektierungsaufwand und die damit verbundenen Unsicherheiten entfallen, wenn die Peripherieeinheit 5 die Überwachungszeit selbstlernend einstellt. Dazu beobachtet die Peripherieeinheit 5 den Wechsel der Lebenszeichen LzX und LzY nach einem Start des redundanten Steuerungssystems für eine vorgegebene maximale Zeit. Sobald die Zykluszeit der Lebenszeichenwechsel festgestellt wurde, wird diese Zeit mit einem Sicherheitszuschlag versehen und als Überwachungszeit abgespeichert.

## Patentansprüche

1. Redundantes Steuerungssystem mit zumindest einem ersten Steuerrechner (1) und einem zweiten Steuerrechner (2) und mit zumindest einer Peripherieeinheit (5), die über zumindest ein Bussystem (3, 4) mit dem ersten Steuerrechner (1) und mit dem zweiten Steuerrechner (2) zum Austausch von Steuerdaten verbunden ist, wobei die Peripherieeinheit (5) nur Steuerdaten von einem Steuerrechner (1) zur Ausführung einer Steuerungsaufgabe auswertet, **dadurch gekennzeichnet, dass** der erste Steuerrechner (1) und der zweite Steuerrechner (2) dazu ausgebildet sind, an die Peripherieeinheit (5) über das Bussystem (3, 4) jeweils zyklisch wechselnde Lebenszeichen (LzX, LzY) zu übertragen, und dass die Peripherieeinheit (5) dazu ausgebildet ist, zu überprüfen, ob innerhalb einer vorgebbaren Zeitdauer ein Wechsel eines Lebenszeichens (LzX, LzY) aufgetreten ist, und bei Ausbleiben eines Wechsels einen Fehler des jeweiligen Steuerrechners (1, 2) zu erkennen und auf den anderen Steuerrechner (2, 1) zur Ausführung der Steuerungsaufgabe umzuschalten.

2. Redundantes Steuerungssystem nach Anspruch 1, **dadurch gekennzeichnet, dass** die beiden Steuerrechner (1, 2) dasselbe Steuerprogramm ausführen.

3. Redundantes Steuerungssystem nach Anspruch 1 oder 2, **dadurch gekennzeichnet, dass** die Steuerrechner dazu ausgebildet sind, Lebenszeichen (LzX, LzY) mit jeweils verschiedenen Wertigkeiten zu übertragen.

4. Redundantes Steuerungssystem nach einem der vorhergehenden Ansprüche, **dadurch gekennzeichnet, dass** die Steuerrechner (1, 2) dazu ausgebildet sind, die Lebenszeichen (LzX, LzY) innerhalb der regulären Telegramme für die Steuerdaten zu übertragen.

5. Steuerrechner für ein redundantes Steuerungssystem mit zumindest einem ersten Steuerrechner (1) und einem zweiten Steuerrechner (2) und mit zumindest einer Peripherieeinheit (5), die über zumindest ein Bussystem (3, 4) mit dem ersten Steuerrechner (1) und mit dem zweiten Steuerrechner (2) zum Austausch von Steuerdaten verbunden ist, wobei die Peripherieeinheit (5) nur Steuerdaten von einem Steuerrechner (1) zur Ausführung einer Steuerungsaufgabe auswertet, **dadurch gekennzeichnet, dass** der Steuerrechner (1, 2) dazu ausgebildet ist, an die Peripherieeinheit (5) über das Bussystem (3, 4) zyklisch wechselnde Lebenszeichen (LzX, LzY) zu übertragen.

6. Steuerrechner nach Anspruch 5, **dadurch gekennzeichnet, dass** der Steuerrechner dazu ausgebildet ist, Lebenszeichen (LzX, LzY) mit jeweils verschiedenen Wertigkeiten zu übertragen.

7. Steuerrechner nach Anspruch 5 oder 6, **dadurch gekennzeichnet, dass** der Steuerrechner dazu ausgebildet ist, die Lebenszeichen (LzX, LzY) innerhalb der regulären Telegramme für die Steuerdaten zu übertragen.

8. Peripherieeinheit für ein redundantes Steuerungssystem mit zumindest einem ersten Steuerrechner (1) und einem zweiten Steuerrechner (2) und mit zumindest einer Peripherieeinheit (5), die über zumindest ein Bussystem (3, 4) mit dem ersten Steuerrechner (1) und mit dem zweiten Steuerrechner (2) zum Austausch von Steuerdaten verbunden ist, wobei die Peripherieeinheit (5) nur Steuerdaten von einem Steuerrechner (1) zur Ausführung einer Steuerungsaufgabe auswertet, **dadurch gekennzeichnet, dass** die Peripherieeinheit dazu ausgebildet ist, zu überprüfen, ob innerhalb einer vorgebbaren Zeitdauer ein Wechsel eines Lebenszeichens (LzX, LzY) aufgetreten ist, und bei Ausbleiben eines Wechsels einen Fehler des jeweiligen Steuerrechners (1, 2) zu erkennen und auf den anderen Steuerrechner (2, 1) zur Ausführung der Steuerungsaufgabe umzuschalten.

## Claims

1. Redundant control system with at least a first control computer (1) and a second control computer (2) and with at least one peripheral unit (5), which is connected via at least one bus system (3, 4) to the first control computer (1) and to the second control computer (2) for the exchange of control data, wherein the peripheral unit (5) only evaluates control data from one control computer (1) for executing a control task, **characterized in that** the first control computer (1) and the second control computer (2) are each developed to transfer cyclically changing heartbeats (LzX, LzY) to the peripheral unit (5) via the bus system (3, 4), and that the peripheral unit (5) is developed to check whether a change of a heartbeat (LzX, LzY) has occurred within a predefinable period, and in the absence of a change to recognize a fault in the respective control computer (1, 2) and switch to the other control computer (2, 1) for execution of the control task.

2. Redundant control system according to Claim 1, **characterized in that** both control computers (1, 2) execute the same control program.

3. Redundant control system according to Claim 1 or 2, **characterized in that** the control computers are developed to transfer heartbeats (LzX, LzY) with respectively different values.

4. Redundant control system according to one of the preceding claims, **characterized in that** the control computers (1, 2) are developed to transfer the heartbeats (LzX, LzY) within the regular messages for the control data.

5. Control computer for a redundant control system with at least a first control computer (1) and a second control computer (2) and with at least one peripheral unit (5), which is connected via at least one bus system (3, 4) to the first control computer (1) and to the second control computer (2) for the exchange of control data, wherein the peripheral unit (5) only evaluates control data from one control computer (1) for executing a control task, **characterized in that** the control computer (1, 2) is developed to transfer cyclically changing heartbeats (LzX, LzY) to the peripheral unit (5) via the bus system (3, 4).

6. Control computer according to Claim 5, **characterized in that** the control computer is developed to transfer heartbeats (LzX, LzY) with respectively different values.

7. Control computer according to Claim 5 or 6, **characterized in that** the control computer is developed to transfer the heartbeats (LzX, LzY) within the regular messages for the control data.

8. Peripheral unit for a redundant control system with at least a first control computer (1) and a second control computer (2) and with at least one peripheral unit (5), which is connected via at least one bus system (3, 4) to the first control computer (1) and to the second control computer (2) for the exchange of control data, wherein the peripheral unit (5) only evaluates control data from one control computer (1) for executing a control task, **characterized in that** the peripheral unit is developed to check whether a change of a heartbeat (LzX, LzY) has occurred within a predefinable period, and in the absence of a change to recognize a fault in the respective control computer (1, 2) and switch to the other control computer (2, 1) for execution of the control task.

## Revendications

1. Système de commande redondant comprenant au moins un premier ordinateur de commande (1) et un deuxième ordinateur de commande (2) et au moins une unité périphérique (5) qui est reliée par l'intermédiaire d'au moins un système de bus (3, 4) au premier ordinateur de commande (1) et au deuxième ordinateur de commande (2) en vue de l'échange de données de commande, l'unité périphérique (5) évaluant seulement des données de commande d'un ordinateur de commande (1) pour la réalisation d'une tâche de commande, **caractérisé par le fait que** le premier ordinateur de commande (1) et le deuxième ordinateur de commande (2) sont conçus pour transmettre des signes de vies (LzX, LzY), changeant à chaque fois de façon cyclique, à l'unité périphérique (5) via le système de bus (3, 4) et que l'unité périphérique (5) est conçue pour tester si un changement d'un signe de vie (LzX, LzY) est apparu pendant une durée pouvant être prescrite et, en l'absence d'un changement, pour reconnaître une erreur de l'ordinateur de commande (1, 2) respectif et pour commuter sur l'autre ordinateur de commande (2, 1) pour la réalisation de la tâche de commande.

2. Système de commande redondant selon la revendication 1, **caractérisé par le fait que** les deux ordinateurs de commande (1, 2) réalisent le même programme de commande.

3. Système de commande redondant selon la revendication 1 ou 2, **caractérisé par le fait que** les ordinateurs de commande sont conçus pour transmettre des signes de vie (LzX, LzY) ayant des valeurs respectivement différentes.

4. Système de commande redondant selon l'une des revendications précédentes, **caractérisé par le fait que** les ordinateurs de commande (1, 2) sont conçus pour transmettre les signes de vie (LzX, LzY) à l'intérieur des télégrammes normaux destinés aux données de commande.

5. Ordinateur de commande pour un système de commande redondant comprenant au moins un premier ordinateur de commande (1) et un deuxième ordinateur de commande (2) et au moins une unité périphérique (5) qui est reliée par l'intermédiaire d'au moins un système de bus (3, 4) au premier ordinateur de commande (1) et au deuxième ordinateur de commande (2) en vue de l'échange de données de commande, l'unité périphérique (5) évaluant seulement des données de commande d'un ordinateur de commande (1) pour la réalisation d'une tâche de commande, **caractérisé par le fait que** l'ordinateur de commande (1, 2) est conçu pour transmettre des signes de vie (LzX, LzY), changeant à chaque fois de façon cyclique, à l'unité périphérique (5) via le système de bus (3, 4).

6. Ordinateur de commande selon la revendication 5, **caractérisé par le fait que** l'ordinateur de commande est conçu pour transmettre des signes de vie (LzX, LzY) ayant des valeurs respectivement différentes.

7. Ordinateur de commande selon la revendication 5 ou 6, **caractérisé par le fait que** l'ordinateur de commande est conçu pour transmettre les signes de vie (LzX, LzY) à l'intérieur des télégrammes normaux destinés aux données de commande.

8. Unité périphérique pour un système de commande redondant comprenant au moins un premier ordinateur de commande (1) et un deuxième ordinateur de commande (2) et au moins une unité périphérique (5) qui est reliée par l'intermédiaire d'au moins un système de bus (3, 4) au premier ordinateur de commande (1) et au deuxième ordinateur de commande (2) en vue de l'échange de données de commande, l'unité périphérique (5) évaluant seulement des données de commande d'un ordinateur de commande (1) pour la réalisation d'une tâche de commande, **caractérisée par le fait que** l'unité périphérique est conçue pour tester si un changement d'un signe de vie (LzX, LzY) est apparu pendant une durée pouvant être prescrite et, en l'absence d'un changement, pour reconnaître une erreur de l'ordinateur de commande (1, 2) respectif et pour commuter sur l'autre ordinateur de commande (2, 1) pour la réalisation de la tâche de commande.
